(19) Europäisches Patentamt
European Patent Office
Office européen des brevets

(11) **EP 3 824 136 B1**

(12) **EUROPEAN PATENT SPECIFICATION**

(45) Date of publication and mention
of the grant of the patent:
**19.04.2023  Bulletin 2023/16**

(21) Application number: **19737794.8**

(22) Date of filing: **16.07.2019**

(51) International Patent Classification (IPC):
**D21C 5/00** *(2006.01)*     **D21C 11/00** *(2006.01)*
**D21C 11/02** *(2006.01)*

(52) Cooperative Patent Classification (CPC):
**D21C 5/005; D21C 11/0064; D21C 11/02**

(86) International application number:
**PCT/EP2019/069146**

(87) International publication number:
**WO 2020/016241 (23.01.2020 Gazette 2020/04)**

(54) **A PROCESS FOR CONTROLLING THE SODIUM AND SULFUR BALANCE IN A PULP MILL**

VERFAHREN ZUR STEUERUNG DES NATRIUM- UND SCHWEFELAUSGLEICHS IN EINER ZELLSTOFFFABRIK

PROCÉDÉ PERMETTANT DE CONTRÔLER L'ÉQUILIBRE DU SODIUM ET DU SOUFRE DANS UNE USINE DE PÂTE À PAPIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **19.07.2018  EP 18184452**

(43) Date of publication of application:
**26.05.2021  Bulletin 2021/21**

(73) Proprietors:
• **Stora Enso Oyj**
  **00101 Helsinki (FI)**
• **Paques I.P. B.V.**
  **8561 EL Balk (NL)**

(72) Inventors:
• **VAN ZESSEN, Erik**
  **8447 DX Heerenveen (NL)**
• **NOORDINK, Michel Paulus Maria**
  **8023 CH Zwolle (NL)**
• **WADSBORN, Rickard**
  **144 64 Rönninge (SE)**
• **TIMONEN, Olli**
  **53300 Lappeenranta (FI)**
• **BJÖRK, Maria**
  **653 49 Karlstad (SE)**
• **KOTILAINEN, Ari**
  **80260 Joensuu (FI)**

(74) Representative: **Nederlandsch Octrooibureau**
**P.O. Box 29720**
**2502 LS The Hague (NL)**

(56) References cited:
**WO-A1-91/16269          WO-A1-98/04503**
**WO-A1-2009/101090     WO-A1-2016/131930**
**US-A- 5 480 550          US-A- 6 136 193**
**US-A1- 2017 305 773**

**Description**

**Field of the invention**

The present invention relates to a process for controlling the sodium and sulfur balance in a pulp mill.

**Background art**

Today the most common chemical wood pulp technology is Kraft pulping (sulfate process), where wood chips are cooked in a so-called 'white liquor'. The white liquor is a mixture of different chemicals, typically sodium hydroxide (NaOH) and sodium sulfide ($Na_2S$). The process releases the cellulose fibres from the wood chips which produces a brown pulp. The pulp is then washed and used as unbleached kraft pulp or bleached to produce white pulp. The pulp can then be used for different paper products in the range between fine paper to board.

The sodium and sulfur balance is an essential part of the economy of a pulp mill, as the recycling of sodium and sulfur is a key factor to maintain process economy of the mill, in particular in the Kraft mill. The charge of sodium hydroxide in the digester is related to the rate of delignification and yield, while the sulfur is used as a catalyst in the delignification of the wood in the digester. The parameters alkali charge and sulfidity are essential tools for the mill to control cooking results and pulp quality as well as it sets the prerequisites for how the recovery cycle should be operated.

The kraft pulp mill of today is rather effective in recycling the process chemicals sodium and sulfur internally. Sulfur is normally not needed as make-up chemical in softwood mills, as the demand of sulfur is covered by using either spent acid from the chlorine dioxide plant or sulfuric acid as acidifying agent in the tall oil plant. Sulfur may also be added as $MgSO_4$ in the oxygen delignification stages thus contributing to the sulfur balance.

In eucalyptus mills the situation is somewhat different: as the mills are not equipped with a tall-oil plant, the addition of sulfur as make-up chemical may be needed.

The input of sulfur to a softwood mill is normally larger than what is needed. This leads to an accumulation of sulfur in the mill, with an increased sulfidity, or sulfur/ sodium (S/Na) ratio, as a result. In other words, there is an imbalance in the amout of sulfur and sodium. A too high sulfidity is undesirable, as the process parameters of the recovery boiler and recovery cycle may drift from the optimal. In addition, the emission of sulfur from the mill, either as SOx or as dilute gases will increase with an increasing sulfidity, thus deteriorating the local and global environmental performance of the mills, due, for example, to corrosion of lines. As a result, the sulfur has to be removed from the mill in a controlled manner, and this is normally done by removing dust from the electrostatic precipitators in the recovery boiler. This dust is a salt comprising a few compounds wherein the main compounds normally are $Na_2SO_4$ and $Na_2CO_3$ accompanied with smaller amounts of KCl, NaCl, $K_2CO_3$ and $K_2SO_4$. The composition of the dust varies, depending on the composition of liquor and the boiler parameters. Balancing the sulfur level in the mill by removing the dust means that a considerable amount of sodium is also removed and this sodium has to be replaced. This is normally done by charging pure NaOH, either directly to the recovery cycle of the mill or to the oxygen delignification stage. This fact that removal of the dust leads to a charge of fresh NaOH, means that increased intake of sulfur to the mill will lead to increased operation costs due to that the charge of NaOH needs to be increased.

US 6136193 discloses a process for the biotreatment of wastewater from pulping industries. Sulfides are removed by a number of strains of bacteria from the genus *Thiobacillus* or *Thiobacillus denitrificans.* To control pH of the heterotrophic reaction with inorganic and organic sulfides, magnesium oxide (MgO) is utilized along with caustic. Ammonia and phosphate are available to the heterotrophs and to the *Thiobacillus* or *Thiobacillus denitrificans* bacteria by chemical addition.

The publication 'Application of bacteria involved in the biological sulfur cycle for pulp mill effluent purification', Albert J.H. Janssen, Piet N.L. Lens, Alfons J.M. Stams, Caroline M. Plugge, Dimitri Y. Sorokinc, Gerard Muyzerc, Henk Dijkmane, Erik Van Zessene, Peter Luimes, Cees J.N. Buismana, Science of the total environment, 407, (2009) 1333-13343 discloses a process in which the sulfate containing wastewater first passes an anaerobic UASB reactor for bulk COD removal which is accompanied by the formation of biogas and hydrogen sulfide. In an aeration pond, the residual organic substances and the formed dissolved hydrogen sulfide are removed. Janssen et al discusses sulfate containing waste water and not sulfide comprising pulp mill streams.

Outside the field of the pulping industry, WO 98/04503 discloses a process for the biological treatment of a spent caustic solution containing sulfides, wherein the solution is introduced into an aerobic reactor containing sulfide-oxidising bacteria, and the sulfides are partly converted to elemental sulfur and partly to sulfate by controlling the redox potential in the reactor at a value below -300 mV (against an Ag/AgCl reference electrode), or below -97 (against a H2 reference electrode).

WO2005044742 discloses relates to the treatment of sulfur-containing salts using biological oxidation with the possibility of recovering dissolved salts. The sole example discloses a process in which an aqueous solution is treated, which contained about 75 g/l of sodium (3 M) and 45 g/l of dissolved sulfide. The solution was fed together with a nutrient solution containing among other a nitrogen and a phosphorous source to a continuously operating 5 liter bioreactor at a temperature of 30 °C containing *Thio(alkali)vibrio* strains comprising strain DSM 13738. A gas recycle over the bioreactor ensured mixing. Oxygen was added to the gas recycle in order to maintain the redox potential in solution to a value between -100 and -450 mV, preferably -360 to -430 mV measured with a platinum electrode against an Ag/AgCl reference electrode. The pH was measured with a glass electrode. It was controlled at a value between 9 and 12, in particular at about 10.5 through the injection of $CO_2$ gas in the gas recycle. *Thio(alkali)vibrio* bacteria converted the dissolved sulfide to elemental sulfur. Effluent from the bioreactor was led through a settler where the sulfur was separated from the liquid.

Consequently, there is a need for an improved method for controlling the sodium/sulfur balance in a pulp mill.

## Summary of the invention

The present invention provides a process for the controlling the sodium and sulfur balance in a pulp as defined in the present claim 1.

According to the present invention, a process as defined above is provided, in which sulfur (present for example as sulfide) is removed from a pulp mill stream in the form of elemental sulfur by contacting the steam with sulfide oxidizing bacteria.

It has been found that it is possible to efficiently and specifically reduce the amount of sulfides in a stream from a pulp mill without diluting the salt concentration of the pulp mill stream prior to contacting the pulp mill stream with the sulfide oxidizing bacteria. By mixing the pulp mill stream with a portion of the sulfide oxidizing bacteria prior to supplying the pulp mill stream to the reactor, conditions are maintained in the reactor that stimulate the sulfide oxidizing bacteria. The process of the present invention does not require costly, energetically inefficient dilution of the high salt concentration of pulp mill streams. Not only is the sodium/sulfur balance of the pulp mill improved, but also the amount of alkali needed to achieve the balance is reduced compared to prior art solutions.

## Short description of drawings

The present invention will be discussed in more detail below, with reference to the attached drawings:

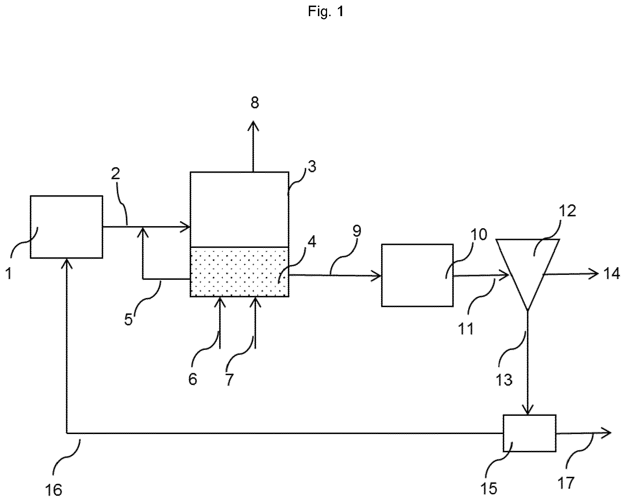

Fig. 1 shows a process diagram according to the present invention.

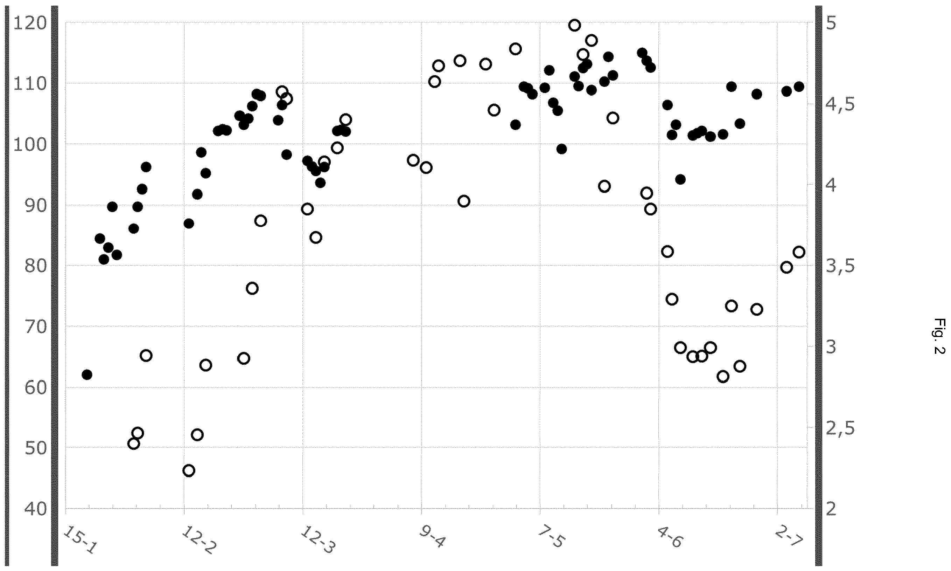

Fig. 2 shows a graph of sodium concentration and conductivity in the bioreactor. The black circles are the conductivity in mS/cm (primary y axis (left)). The white circles are the sodium concentration in mol (secondary y axis (right)). The time course of the process is plotted in months (date-month label) on the x axis.

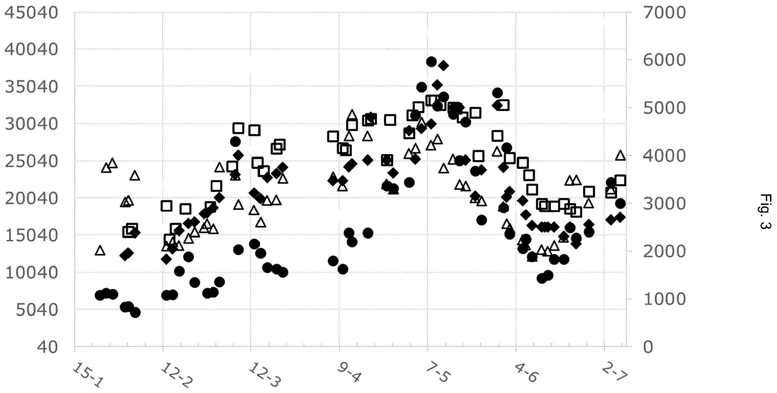

Fig. 3 shows a graph of sulfate and sulfate & sodium, alkalinity in the bioreactor. The white triangles are the sulphate concentration and the black circles are the thiosulphate concentration. (primary y axis (left)). The black diamonds are the alkalinity in mmol (secondary y axis (right)) and the white squares are the sodium concentration (secondary y axis (right)). The time course of the process is plotted in months (date-month) label on the x axis.

## Description of embodiments

The term "pulp mill stream" as used herein means a melt, liquid or aqueous process fluid originating from a pulp mill, for example green liquor and white liquor.

The term "green liquor" as used herein means the liquor produced from dissolving a smelt from a kraft recovery furnace. Green liquor normally comprises sodium carbonate ($Na_2CO_3$), sodium sulfide ($Na_2S$) and sodium hydroxide (NaOH) as the main compounds. Typically, such a liquor has total alkali concentration of more than 2 M.

The term "white liquor" as used herein means a liquor comprising sodium sulfide and sodium hydroxide as the main components used as a delignification agent for wood chips in kraft pulping. Typically, such a liquor has total alkali concentration of more than 2 M.

"Chemical oxygen Demand" (COD) refers to organic material that can be oxidised to smaller molecules, ultimately to carbon dioxide and water, and the term expresses the amount of oxygen that would be needed to oxidise the organic material in a litre of wastewater.

The term "sulfur compounds" as used herein means compounds comprising sulfur, for example metal salts of sulfide, sulfide, sulfate, sulfite, thiosulfate, said metal being sodium or potassium.

The term "sulfide" as used herein relates to sulfide is to any form of sulfide, including sulfide anions, monohydrogen sulfide ions, hydrogen sulfide, polysulfide, and organic sulfides such as lower alkyl mercaptans and carbon disulfide.

The term "sulfidity" as used herein means the sodium sulfide/sodium hydroxide ratio. Sulfidity is calculated by dividing the weight of sodium sulfide (expressed in g/l on $Na_2O$ basis) by the weight of sodium hydroxide plus sodium sulfide (also expressed in g/l on $Na_2O$ basis) multiplied by 100.

The term "total alkali" as used herein means all $Na^+$, and equivalents such as $K^+$, containing compounds.

The term "carbonate" as used herein relates to carbonate in any form of carbonate, including carbonate anions, sodium hydrogen carbonate, sodium carbonate, Burkeite ($Na_6(SO_4)_2(CO_3)$).

The stream supplied to the bioreactor is only a part of the total stream available in the pulp mill, i.e. only a part of the total stream is fed to the bioreactor. It has surprisingly been found that it is sufficient to only treat a first part of the stream from the pulp mill with the process according to the present invention. This is due to that the process is very efficient and it often is sufficient to only treat a first part of the total stream in order to achieve the desired balance of the sodium/sulfur ratio of the mill.

Preferably, the portion of the total stream that is treated in the bioreactor may be in the range of 1 to 40% by weight of the provided stream (i.e. by weight of the total available stream), preferably in the range of 3 to 30%, even more preferably 5 to 25%, by weight of the provided stream.

All streams from a pulp mill that comprises sulfide can be used in the process according to the invention. Preferably, the pulp mill stream is a stream from a Kraft pulp mill, such as green or white liquor. It has been found especially suitable to treat part of a green liquor stream with the bacteria according to the invention. Green liquor comprises large amounts of sulfide and despite the high salt concentration of the green liquor, it has been found that such a feed can be used without adding large volumes of aqueous diluents.

The pulp mill stream typically contains a high concentration of sulphide, for example above 10 g/l. In case the autotrophic sulphide oxidizing bacteria are directly exposed to this, their aerobic activity has to compete with the abiotic (non-biological oxidation) reaction producing thiosulphate as shown in Equation 1. The thiosulphate production does not regenerate the green liquor caustic strength.

$$2HS^- + 2\,O_2 \rightarrow S_2O_3^{2-} + H_2O \qquad \text{Equation 1}$$

Without wishing to be bound by theory, thiosulphate production depends on both the (poly)sulphide concentration as well as the oxygen concentration. The reaction rate can be described with

$$dHS/dt = -k\,[Sx]\,[O_2]^{0.6} \qquad \text{Equation 2}$$

with the concentrations in mol/l and k equals 1 ($L^{0.6}/mol^{0.6}/s$)

Due to the presence of sulphur in the solution, polysulphides are largely present in the bioreactor. The pH of the bioreactor is preferably in the range of 8 to 11 at 30 °C, and the polysulphide dissociation constant is ~9. Hence almost all sulphide is present as polysulphide, as summarized in Equation 3:

$$S_{x+2}^{2-} + 1.5\,O_2 \rightarrow S_2O_3^{2-} + S_x \qquad \text{Equation 3}$$

The inventors have found that when a portion of the sulfide oxidizing bacteria is removed from the bioreactor and mixed with the pulp mill stream prior to supplying the pulp mill stream to the bioreactor in step b), the production of thiosulphate is reduced and the production of elemental sulfur is increased.

The pulp mill stream may comprise, in addition to sulfide, other sulfur compounds. Sulfur compounds that may be present include any sulfur species, such as sulfate, sulfite, sulfide, thiosulfate, etc. Levels of sulfur compounds may vary widely e.g. between 0.05 and 50 g of the sulfur compounds (on elemental sulfur basis) per L, in particular between 0.1 and 40 g sulfur per L. On sulfate basis, the weight amounts are three times the amount on elemental sulfur basis because of the molar weight ratio $SO_4/S°$ of 96/32. Thus at least 0.05 g (50 mg) of sulfur compounds per L on elemental sulfur basis corresponds to at least 150 mg of sulfate per L. The present invention has the advantage that the process does not require diluting of the total amount of sulfur compounds prior to mixing with the sulfide oxidizing bacteria.

The sulfide concentration in the aqueous solution to be treated is not critical in the process according to the invention. Feed streams with sulfide concentrations (expressed as by weight of sulfur) as high as 30 grams per litre or even higher may be used. Preferably, the sulfide concentration in the pulp mill stream is in the range of from 10 mg/L to 100 g/L, more preferably of from 20 mg/L to 80 g/L, even more preferably of from 0.1 g/L to 60 g/L, still more preferably of from 0.5 g/L to 30 g/L. For example, in a preferred embodiment, the pulp mill stream comprises at least 15 g/L sulfide, preferably at least 20 g/L sulfide even more preferably at least 25 g/L sulfide.

The present invention comprises step d) of separating the elemental sulfur from the treated pulp mill stream to provide a desulfurized pulp mill stream, wherein said desulfurized pulp mill stream is reused in a process at the pulp mill, and preferably wherein at least a portion of the separated elemental sulfur is reused in a process at the pulp mill.

In a preferred embodiment, the desulfurized pulp mill stream, that is the treated pulp mill stream from which sulphide and sulfur have been removed, is supplied to the pulp mill to be used in a process at the pulp mill. In other words, the treated stream leaves the bioreactor and is fed to a suitable solid/liquid separator where the elemental sulfur is separated and a sulfide depleted stream is removed, which sulfide depleted stream is optionally fed back into a process in the pulp mill.

The pulp mill stream preferably comprises carbonate. Preferably, the pulp mill stream has a carbonate concentration in the range of at least 50 g/L, preferably at least 60 g/L.

The pulp mill stream preferably has a conductivity of at least 70 mS/cm, preferably at least 80 mS/cm, more preferably at least 90 mS/cm, most preferably at least 100 mS/cm. It has been found that the process of the present invention has the advantage that streams having a high conductivity can be tolerated in the bioreactor.

Preferably, the pulp mill stream has a total alkali concentration in the range of 2 to 6 Molar, preferably 3 to 5 Molar, more preferably 2.5 to 4.5 Molar.

In the process according to the invention any suitable autotrophic sulfide-oxidising bacteria may be used. Suitable sulfide-oxidising bacteria are known in the art. The autotrophic sulfide oxidizing bacteria preferably belong to the group of *Thioalkalimicrobium, and/or Thioalkalivibrio*. Preferably autotrophic sulfide- oxidising bacteria of the genera *Halothiobacillus*, *Thioalkalispira*, *Thioalkalibacter*, *Thiobacillus* or *Thiomicrospira* and related bacteria are used. The bacteria may be used as such, or may be supported on a dispersed carrier or may be immobilised on a solid carrier.

The chemical reaction carried out by the bacteria is shown below.

$$HS- \quad + \quad \tfrac{1}{2}\,O_2 \quad ---> \quad S \quad + \quad OH^- \qquad \text{Equation 4}$$

$$HS- \quad + \quad 2\,O_2 \quad ---> \quad SO_4^{2-} + \quad H^+ \qquad \text{Equation 5}$$

It is apparent from this reaction scheme that the bacteria produce hydroxide ions, and consequently the pH will increase over time. Therefore, it is preferable to add a pH adjustment agent to the bioreactor.

Preferably, a pH adjustment agent is supplied during step b) to maintain a pH in the range of 8 to 11 at 30 °C, preferably in the range of 9 to 10.5 at 30 °C, even more preferably in the range of 9.2 to 10.2 at 30 °C, even more preferably 9.4 to 10.0 at 30 °C.

The pH may be controlled by any suitable pH controlling or reducing agent, e.g. a gas, for example carbon dioxide or sour gas, or any other suitable acid, for example hydrochloric acid, nitric acid and phosphoric acid. Preferably, the pH adjustment agent is carbon dioxide. The pH may not be too low since problems with scaling will occur.

The conversion of sulfide to element sulfur takes place in the presence of oxygen. Preferably, the amount of oxygen present in step c) in the range of 0.5-1.25 mole of oxygen ($O_2$) per mole of $H_2S/HS^-$. Preferably, the oxygen supplied to the reactor is provided by a molecular-oxygen comprising gas. Preferably, the molecular-oxygen comprising gas is air or oxygen-depleted air, i.e. air having less than 20% (by volume) of oxygen, e.g. between 2 and 15 vol.% of oxygen.

The molecular-oxygen containing gas is preferably supplied to the reactor in such amount that an optimum amount of oxygen reactant is present for the required oxidation reaction (sufficient for the oxidation to sulfur; not too much in order to avoid sulfate formation) and that sufficient mixing of feed stream with aqueous medium takes place in order to quickly dilute the inlet sulfide concentration.

The sulfide-oxidising reaction in the reactor is preferably carried out at a temperature in the range of from 20 to 45 °C.

The skilled person understands that the portion of sulfide oxidizing bacteria that is mixed with the portion of pulp mill stream prior to supplying the pulp mill stream to the reactor in step b), is provided as part of a solution/slurry of the reactor contents.

In another preferred embodiment, the process further comprises: step e) converting the elemental sulfur to sulfuric acid. The removed elemental sulfur that is separated from the stream during the process may be reused in any suitable process in the pulp mill, e.g. to production of sulfuric acid to be either sold or reused at the mill. It may also be externally sold as such, used as feedstock for local production of $SO_2$ gas, used to produce polysulfide cooking liquor, utilized in certain processes for the production of chloride dioxide ($ClO_2$) and/or used to enhance the quality (concentration) of bisulfite produced at the mill. Due to its hydrophilic nature and very fine and porous particle structure it can also be used in several commercial applications such is as fertilizer, rubber vulcanizing agents and as pesticide production, where elemental sulfur is used today.

The sulfide oxidizing bacteria require nutrients for their growth and maintenance. Therefore a balanced solution of the essential minerals is dosed to the bioreactor. The concentration of the bacteria is kept at the desired level by supplying nutrients as is known to the skilled person.

The present invention has been described above with reference to a number of exemplary embodiments as shown in the drawings. Modifications and alternative implementations of some parts or elements are possible, and are included in the scope of protection as defined in the appended claims.

Figure 1 shows an installation for carrying a process according to the present invention. A pulp mill stream comprising sulfide generated by pulp mill **1** is provided via supply line **2** to bioreactor **3**. A portion of the bioreactor contents **4** is supplied via supply line **5** to blend with the stream prior to the stream being supplied to the bioreactor **3**. Line **6** feeds gas (air, oxygen) to the bioreactor and line **7** feeds a pH adjustment agent **7** to the bioreactor. The spent air is removed via **8**. In the bioreactor sulfide is oxidized to elemental sulfur by autotrophic sulfide-oxidizing bacteria. The treated stream leaves the bioreactor by line **9** and may optionally be stored in a storage tank **10** before being fed to via line **11** to separator **12**. The separated elemental sulfur slurry is removed via line **13** and the sulfide depleted stream is removed via line **14** and optionally fed back into a process in the pulp mill. The separated elemental sulfur slurry is supplied via line **13** to a processing unit **15**, for example to be dried. The elemental sulfur is then fed via line **16** back into a process in pulp mill **1**, or removed via line **17**.

The calculated sodium concentrated is shown in Figure 2 (sodium equals 2x [sulphate + thiosulphate] + alkalinity). All concentrations follow the same pattern of increasing and decreasing pattern. In Figure 3 the concentration of both sulfate and thiosulfate concentration are shown, as well as the measured alkalinity. Sulphate was measured with Hach-Lange (LCK153), sulphide with Hach-Lange (LCK653) and thiosulphate as COD with Hach-Lange (LCK154).

**Examples**

**Measurement methods**

The alkalinity of the pulp mill stream is determined by bringing sample of said stream to pH 4.0 with hydrochloric acid. The amount of acid needed indicates the alkalinity (buffering capacity) of the liquid. A 100 mL sample of centrifuged stream was pipetted in to a glass beaker and 100 ml demineralized water was added. pH electrode was placed in the solution. The solution in the beaker was titrated with 0.1 M hydrochloric acid to pH 4.0, while the solution is continuously stirred at room temperature. The volume of titrated hydrochloric acid solution (= Z) was noted and the alkalinity determined by equation 3:

$$\text{Alkalinity} = 0.1 \times \frac{Z}{V} \qquad\qquad (3)$$

Key:

Alkalinity    Alkalinity of the sample (mol/l)
Z           Titrated volume of 0.1 M hydrochloric acid (ml)
V           Sample volume (ml)

Oxidation -reduction potential in the bioreactor was monitored using an ORP-sensor (Endress+Hauser)

Anions: $SOs$, $SO_4$, $S_2O_5$ were measured by ionic chromatography using standard methods. Cation concentrations were measured ICP-OES analysis. Samples were prepared using standard methods by wet digestion, lithium-carbonate melt, and hydrochloric acid dissolution.

Sulfide ($HS^-$) was measured by titration according to standard method SCAN-N 5:83, Scandinavian Pulp, Paper and Board Testing Committee, Revised 1983.

Carbonate ($COs$) was measured according to standard method SCAN-N 32:1998, Scandinavian Pulp, Paper and Board Testing Committee, Revised 1998.

**Example 1**

A continuously fed system consisting of one bioreactor series was used. The system was operated under sulfide oxidizing conditions (pH 9.5; $Na^+$ >4 M) using autotrophic sulphide oxidising bacteria originating from soda lakes. The reactor have a maximum wet volume of 5 L (0=100 cm). The temperature was maintained at 30 °C by using a water-jacket and a thermostat bath (Shinko, Japan). The influent was fed to the bioreactor using peristaltic pumps (Watson-Marlow), and the effluent from the reactor was controlled by overflow. The sulfide rich stream (influent) was mixed with a portion of the contents of the bioreactor prior to addition to the bioreactor. The pH was monitored using a pH sensor (Endress+Hauser The Netherlands). The oxygen supply was done with air dosing controlled with an ORP-sensor (Endress+Hauser, the Netherlands)

The sulfide oxidizing bacteria present in the bioreactor is a species adapted to an increased salt concentration, but not adapted to the high salt concentration of the green liquor

After a gradual build-up in about 6 weeks, the conductivity was maintained well above 100 mS/cm. Despite that some periods of precipitation of NaHCOs the bacteria were still active, even at sodium concentration above 4.5M. This is advantageous, as the current full scale commercial desulfurization (e.g. Thiopaq process) plant will operate at a sodium concentration up to 1.5 M and a maximum operating pH of 9.

The complete composition of the influent and effluent is shown in Table 1.

Table 1

| | Influent pulp mill stream - green liquor | Effluent 1 | Effluent 2[1] |
|---|---|---|---|
| **Cations in mg/l** | | | |
| **Sodium** | 85497 | 99579 | 98579 |
| **Potassium** | 10754 | 12491 | 13045 |
| **Calcium** | 26 | 9.9 | 5.9 |
| **Magnesium** | 4.2 | 7.2 | 12 |
| **Aluminium** | 3.8 | 1.9 | 1.7 |
| **Copper** | 0.042 | 0.031 | 0.045 |
| **Iron** | 1.3 | 1 | 0.92 |
| **Manganese** | 4.2 | 12 | 7.2 |
| **Zinc** | 0.29 | 0.17 | 0.13 |
| | | | |
| **Anions in mg/l** | | | |
| **Sulphate** | 5500 | 17000 | 20000 |
| **Sulphite** | 2500 | n.d. | n.d. |
| **Thiosulphate** | 5200 | 23000 | 24000 |
| **Carbonate** | 65000 | 120000 | 110000 |
| **Sulfide[2]** | 19943 | | |
| Biologically produced sulfur compounds (elemental sulfur) : thiosulphate | | 1:1 | 1:1 |
| [1] Effluent 2 was taken 7 days after effluent 1 | | | |

Example 2

Table 2

| | Savings in caustic consumption[3] |
|---|---|
| 2-A: without premixing[2] | Negligible < 0.6 kg NaOH/kg S removed |
| 2-1 with premixing[2] | 2.6 kg NaOH/kg S removed |
| [2] Influent pulp mill stream - green liquor [3] Isolated from the effluent | |

Example 2-1 shows that premixing the pulp mill stream with bioreactor contents increases sulphur production and regeneration of caustic (NaOH) compared to example 2-A (comparative) when no premixing takes place.

**Claims**

1. A process for the controlling the sodium and sulfur levels in a pulp mill, comprising the steps of:

    a) providing a pulp mill stream comprising sulfide and having a total alkali concentration of at least 2 Molar,
    b) supplying a portion of the pulp mill stream to a reactor comprising sulfide oxidizing bacteria and removing sulfide from the pulp mill stream by subjecting said stream to sulfide oxidizing bacteria in the presence of oxygen, and at a pH in the range 8 to 11, to oxidize the sulfide to elemental sulfur,
    c) withdrawing from the reactor a treated pulp mill stream comprising the elemental sulfur,
    d) separating the elemental sulfur from the treated pulp mill stream to provide a desulfurized pulp mill stream, wherein said desulfurized pulp mill stream is reused in a process at the pulp mill, and preferably wherein at least a portion of the separated elemental sulfur is reused in a process at the pulp mill,

    wherein the portion of the pulp mill stream is mixed with a portion of the sulfide oxidizing bacteria present in the bioreactor prior to supplying the pulp mill stream to the reactor in step b).

2. The process according to claim 1, wherein the pulp mill stream has a conductivity of at least 70 mS/cm, preferably at least 80 mS/cm, more preferably at least 90 mS/cm, most preferably at least 100 mS/cm.

3. The process according to claim 1 or 2, wherein the total alkali concentration is in the range of 2 to 6 Molar, preferably 3 to 5 Molar, more preferably 2.5 to 4.5 Molar.

4. The process according to any one of the preceding claims, wherein pulp mill stream comprises, in addition to sulphide, other sulfur compounds selected from the group consisting of sulfate, sulfite, thiosulfate and mixtures thereof.

5. The process according to any one of the preceding claims, wherein the pulp mill stream comprises at least 15 g/L sulfide.

6. The process according to any one of the preceding claims, wherein pulp mill stream has a carbonate concentration in the range of at least 50 g/L, preferably at least 60 g/L.

7. The process according to any one of the previous claims, wherein a pH adjustment agent is supplied during step c) to maintain a pH in the range of 8 to 11, preferably in the range of 9 to 10.5, even more preferably in the range of 9.2 to 10.2 at 30 °C

8. The process according to claim 7, wherein the pH adjustment agent is an acid, preferably carbon dioxide gas.

9. The process according to any one of the previous claims, wherein the sulfide oxidizing bacteria belong to the group of *Thioalkalimicrobi and/or Thioalkalivibrio* .

10. The process according to any one of the previous claims, wherein the amount of oxygen present in step c) in in the range of 0.5-1.25 mole of oxygen ($O_2$) per mole of $H_2S/HS^-$.

11. The process according to any one of the previous claims, wherein the pulp mill stream is a white liquor and/or green liquor, preferably a green liquor.

12. The process according to any one of the previous claims, wherein the pulp mill stream is not diluted with water prior to contacting the sulfide oxidizing bacteria.

13. The process according to any one of the previous claims, wherein the process further comprises: step e) converting the elemental sulfur to sulfuric acid or using the elemental sulfur as feedstock to local production of SO2 gas.

14. The process according to any one of the previous claims, wherein the portion of the total stream that is treated in the bioreactor may be in the range of 1 to 40% by weight of total available stream, preferably in the range of 3 to 30%, even more preferably 5 to 25%, by weight of the provided stream.

# EP 3 824 136 B1

**Patentansprüche**

1. Verfahren zum Steuern des Natrium- und Schwefelgehalts in einer Zellstofffabrik, das die folgenden Schritte umfasst:

   a) Bereitstellen eines Zellstofffabrikstroms, der Sulfid enthält und eine Gesamtalkalikonzentration von mindestens 2 Molar aufweist,
   b) Liefern eines Teils des Zellstofffabrikstroms an einen Reaktor, der sulfidoxidierende Bakterien enthält, und Entfernen von Sulfid aus dem Zellstofffabrikstrom, indem der besagte Strom sulfidoxidierenden Bakterien in Gegenwart von Sauerstoff und bei einem pH-Wert im Bereich von 8 bis 11 ausgesetzt wird, um das Sulfid zu elementarem Schwefel zu oxidieren,
   c) Entnehmen eines behandelten Zellstofffabrikstroms, der den elementaren Schwefel enthält, aus dem Reaktor,
   d) Abtrennen des elementaren Schwefels aus dem behandelten Zellstofffabrikstrom, um einen entschwefelten Zellstofffabrikstrom bereitzustellen, wobei der besagte entschwefelte Zellstofffabrikstrom in einem Verfahren in der Zellstofffabrik wiederverwendet wird und wobei vorzugsweise mindestens ein Teil von dem abgetrennten elementaren Schwefel in einem Verfahren in der Zellstofffabrik wiederverwendet wird,

   wobei der Teil des Zellstofffabrikstroms mit einem Teil der sulfidoxidierenden Bakterien gemischt wird, die in dem Bioreaktor vorhanden sind, bevor der Zellstofffabrikstrom an den Reaktor in Schritt b) geliefert wird.

2. Verfahren nach Anspruch 1, wobei der Zellstofffabrikstrom eine Leitfähigkeit von mindestens 70 mS/cm, vorzugsweise mindestens 80 mS/cm, besonders bevorzugt mindestens 90 mS/cm, am meisten bevorzugt mindestens 100 mS/cm, hat.

3. Verfahren nach Anspruch 1 oder 2, wobei die Gesamtalkalikonzentration im Bereich von 2 bis 6 Molar, vorzugsweise 3 bis 5 Molar, besonders bevorzugt 2,5 bis 4,5 Molar, liegt.

4. Verfahren nach einem der vorherigen Ansprüche, wobei der Zellstofffabrikstrom neben Sulfid auch andere Schwefelverbindungen enthält, ausgewählt aus der Gruppe bestehend aus Sulfat, Sulfit, Thiosulfat und Mischungen davon.

5. Verfahren nach einem der vorherigen Ansprüche, wobei der Zellstofffabrikstrom mindestens 15 g/L Sulfid enthält.

6. Verfahren nach einem der vorherigen Ansprüche, wobei der Zellstofffabrikstrom eine Karbonatkonzentration im Bereich von mindestens 50 g/L, vorzugsweise von mindestens 60 g/L, aufweist.

7. Verfahren nach einem der vorherigen Ansprüche, wobei während Schritt c) ein pH-Wert-Einstellmittel zugeführt wird, um einen pH-Wert im Bereich von 8 bis 11, vorzugsweise im Bereich von 9 bis 10,5, noch bevorzugter im Bereich von 9,2 bis 10,2, bei 30 °C aufrechtzuerhalten.

8. Verfahren nach Anspruch 7, wobei das pH-Einstellmittel eine Säure, vorzugsweise Kohlendioxidgas, ist.

9. Verfahren nach einem der vorherigen Ansprüche, wobei die sulfidoxidierenden Bakterien zu der Gruppe der *Thioalkalimicrobi* und/oder *Thioalkalivibrio* gehören.

10. Verfahren nach einem der vorherigen Ansprüche, wobei die in Schritt c) vorhandene Menge an Sauerstoff im Bereich von 0,5-1,25 mol Sauerstoff ($O_2$) pro mol $H_2S$/$HS^-$ liegt.

11. Verfahren nach einem der vorherigen Ansprüche, wobei der Zellstofffabrikstrom eine Weißlauge und/oder Grünlauge, vorzugsweise eine Grünlauge, ist.

12. Verfahren nach einem der vorherigen Ansprüche, wobei der Zellstofffabrikstrom nicht mit Wasser verdünnt wird, bevor er mit den sulfidoxidierenden Bakterien in Kontakt kommt.

13. Verfahren nach einem der vorherigen Ansprüche, wobei das Verfahren ferner umfasst: Schritt e) Umwandeln des elementaren Schwefels in Schwefelsäure oder Verwenden des elementaren Schwefels als Ausgangsmaterial für die lokale Produktion von SO2-Gas.

14. Verfahren nach einem der vorherigen Ansprüche, wobei der Teil des gesamten Stroms, der in dem Bioreaktor behandelt wird, im Bereich von 1 bis 40 Gew.-% des gesamten verfügbaren Stroms, vorzugsweise im Bereich von 3 bis 30 Gew.-%, noch bevorzugter 5 bis 25 Gew.-% des bereitgestellten Stroms liegen kann.

**Revendications**

1. Procédé permettant de contrôler les niveaux de sodium et de soufre dans une usine de pâte à papier, comprenant les étapes de :

   a) fournir un flux de pâte à papier comprenant du sulfure et ayant une concentration totale en alcali d'au moins 2 molaires,
   b) fournir une partie du flux de pâte à papier à un réacteur comprenant des bactéries oxydant les sulfures et éliminer le sulfure du flux de pâte à papier en soumettant ledit flux à des bactéries oxydant les sulfures en présence d'oxygène, et à un pH compris entre 8 et 11, pour oxyder le sulfure en soufre élémentaire,
   c) soutirer du réacteur un flux de pâte à papier traité comprenant le soufre élémentaire,
   d) séparer le soufre élémentaire du flux de pâte à papier traité pour fournir un flux de pâte à papier désulfuré, où ledit flux de pâte à papier désulfuré est réutilisé dans un procédé à l'usine de pâte à papier, et de préférence où au moins une partie du soufre élémentaire séparé est réutilisé dans un procédé à l'usine de pâte à papier,

   où la partie du flux de pâte à papier est mélangée avec une partie des bactéries oxydant les sulfures présentes dans le bioréacteur avant de fournir le flux de pâte à papier au réacteur à l'étape b).

2. Procédé selon la revendication 1, où le flux de pâte à papier a une conductivité d'au moins 70 mS/cm, de préférence d'au moins 80 mS/cm, idéalement d'au moins 90 mS/cm, plus idéalement d'au moins 100 mS/cm.

3. Procédé selon la revendication 1 ou 2, où la concentration totale en alcali est dans la gamme de 2 à 6 molaires, de préférence de 3 à 5 molaires, idéalement de 2,5 à 4,5 molaires.

4. Procédé selon l'une quelconque des revendications précédentes, où le flux de pâte à papier comprend, en plus du sulfure, d'autres composés soufrés choisis dans le groupe consistant en sulfate, sulfite, thiosulfate et leurs mélanges.

5. Procédé selon l'une quelconque des revendications précédentes, où le flux de pâte à papier comprend au moins 15 g/L de sulfure.

6. Procédé selon l'une quelconque des revendications précédentes, où le flux de pâte a une concentration en carbonate dans la gamme d'au moins 50 g/L, de préférence d'au moins 60 g/L.

7. Procédé selon l'une quelconque des revendications précédentes, où un agent d'ajustement du pH est fourni lors de l'étape c) pour maintenir un pH dans la gamme de 8 à 11, de préférence dans la gamme de 9 à 10,5, encore plus idéalement dans la gamme de 9,2 à 10,2 à 30 °C

8. Procédé selon la revendication 7, où l'agent d'ajustement du pH est un gaz acide, de préférence du dioxyde de carbone.

9. Procédé selon l'une quelconque des revendications précédentes, où les bactéries oxydant les sulfures appartiennent au groupe des *Thioalkalimicrobi* et/ou *Thioalkalivibrio.*

10. Procédé selon l'une quelconque des revendications précédentes, où la quantité d'oxygène présente à l'étape c) est dans la gamme de 0,5 à 1,25 mole d'oxygène ($O_2$) par mole de $H_2S/HS^-$.

11. Procédé selon l'une quelconque des revendications précédentes, où le flux de pâte à papier est une liqueur blanche et/ou une liqueur verte, de préférence une liqueur verte.

12. Procédé selon l'une quelconque des revendications précédentes, où le flux de pâte à papier n'est pas dilué avec de l'eau avant d'être mis en contact avec les bactéries oxydant les sulfures.

13. Procédé selon l'une quelconque des revendications précédentes, où le procédé comprend en outre : l'étape e) convertir le soufre élémentaire en acide sulfurique ou utiliser le soufre élémentaire comme matière première de la production locale de gaz SO2.

14. Procédé selon l'une quelconque des revendications précédentes, où la partie du flux total qui est traitée dans le bioréacteur peut être dans la gamme de 1 à 40 % en poids du flux total disponible, de préférence dans la gamme de 3 à 30 %, encore plus idéalement de 5 à 25 %, en poids du flux fourni.

Fig. 1

Fig. 2

Fig. 3

**EP 3 824 136 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6136193 A
- WO 9804503 A

- WO 2005044742 A

**Non-patent literature cited in the description**

- **ALBERT J.H. JANSSEN ; PIET N.L. LENS ; AL-FONS J.M. STAMS ; CAROLINE M. PLUGGE ; DIMITRI Y. SOROKINC ; GERARD MUYZERC ; HENK DIJKMANE ; ERIK VAN ZESSENE ; PETER LUIMES ; CEES J.N. BUISMANA.** Application of bacteria involved in the biological sulfur cycle for pulp mill effluent purification. *Science of the total environment,* 2009, vol. 407, 1333-13343